# EUROPÄISCHE PATENTSCHRIFT

(11) **EP 0 557 707 B1**
(45) Veröffentlichungstag und Bekanntmachung des Hinweises auf die Patenterteilung: **24.04.1996**
(21) Anmeldenummer: 93100655.5
(22) Anmeldetag: 18.01.1993
(51) Int. Cl.: F16H 37/04

(54) **Verfahren zum Schalten eines Gangschaltgetriebes eines Kraftfahrzeugs**
Method of shifting a transmission for a motor vehicle
Procédé de commander une boîte de vitesse pour une voiture

(30) Priorität: 25.02.1992 DE 4205671
(43) Veröffentlichungstag der Anmeldung: 01.09.1993
(73) Patentinhaber: Dr.Ing.h.c. F. Porsche Aktiengesellschaft, D-70435 Stuttgart (DE)
(72) Erfinder: Müller, Robert, W-7256 Mönsheim (DE)

(56) Entgegenhaltungen:
- EP-A- 0 179 544
- DE-A- 2 235 368
- GB-A- 2 008 211

## Beschreibung

Die Erfindung betrifft ein Verfahren zum Schalten eines Gangschaltgetriebe eines Kraftfahrzeugs nach dem Oberbegriff des Anspruchs 1.

Ein derartiges Verfahren ist aus der DE-A 22 35 368 bekannt, bei dem in konventioneller Weise ein Hauptgetriebe mit einem Gruppengetriebe derart geschaltet wird, daß ein erstes Zahnradpaar des Hauptgetriebes zum Schalten zweier benachbarter Getriebegänge in einer Gruppenschaltung doppelt genutzt wird; die dann folgenden Zahnradpaare des Hauptgetriebes werden analog mit dem Gruppengetriebe geschaltet und stellen die nachfolgenden und jeweils benachbarten Getriebegänge bereit. Der Aufbau und die Gangstufung sind somit so gewählt, daß für jeweils zwei benachbarte Getriebegänge ein Zahnradpaar des Hauptgetriebes doppelt genutzt wird. Der Gangwechsel zwischen den jeweils benachbarten Getriebegängen erfolgt also durch entsprechendes Schalten des Gruppengetriebes. Das Getriebe ist dabei mit fluchtenden Antriebs- und Abtriebswellen sowie einer parallelen Vorgelegewelle ausgebildet. Alle Vorwärtsund Rückwärtsgänge werden durch gleichzeitiges Schließen zweier Kupplungen geschaltet.

In dem Buch "Zahnradgetriebe", Johannes Loomann, Springer-Verlag Berlin, 1988, Seite 10, sind Gruppengetriebe beschrieben, die ein meistens zweigängiges, dem normalen Schaltgetriebe voroder nachgeschaltetes Stufengetriebe darstellen. Sie dienen dazu, durch Mehrfachnutzung von Radsätzen die Gangzahl und den Übersetzungsbereich des Getriebes zu erhöhen. Es wird dort ausgesagt, daß bei Zusammenarbeit mit einem Gruppengetriebe Übersetzungssprünge in allen Stufen ungefähr gleich sein müssen, d.h. eine geometrische Reihe bilden, um ungleichmäßig abwechselnde große und kleine Übersetzungssprünge zu vermeiden.

Es ist die Aufgabe der Erfindung, ein Verfahren zum Schalten eines Gangschaltgetriebe eines Kraftfahrzeugs nach dem Oberbegriff des Anspruchs 1 derart weiterzubilden, daß abweichend von der üblichen geometrischen Gangstufung zu den unteren Gängen hin eine sich erhöhende Gangstufung erhalten werden.

Zur Lösung dieser Aufgabe dienen die kennzeichnenden Merkmale des Anspruchs 1. Wenn eine erste Gruppenschaltung zwischen benachbarten Gängen G1 und G2 eine zweite Gruppenschaltung zwischen den nicht benachbarten Gängen G3 und G5 realisiert ist, läßt sich eine zu den unteren Gängen hin ansteigende progressive Stufung erzielen, ohne daß ungleichmäßig abwechselnde Übersetzungssprünge auftreten. Diese progressive Stufung ist erwünscht, um in den unteren Gängen eine größere Spreizung zu erreichen.

Ein weiterer bedeutsamer Vorteil ergibt sich, wenn nach Anspruch 8 eine Synchronisierkupplung beim Schalten aller Getriebegänge beteiligt ist. In diesem Fall kann man durch Abkoppeln der die Synchronisierkupplung betätigenden Schaltstange von einer Betätigungswalze von jedem geschalteten Getriebegang aus in den Leerlauf schalten. Bei Verwendung einer besonders bei Motorrädern bekannten Walzenschaltung braucht man dann nicht alle Gänge nacheinander durchschalten, um in den Leerlauf zu kommen, sondern man kann durch einmaliges Schalten unmittelbar die Leerlaufstellung erreichen. Umgekehrt kann man aus der Leerlaufstellung direkt in jeden beliebigen Gang schalten.

Werden die Gangübersetzungen entsprechend den Merkmalen des Anspruchs 11 gewählt, so läßt sich die progressive Gangstufung mit einer erwünschten höheren Spreizung der unteren Getriebegänge erzielen.

Ein Ausführungsbeispiel der Erfindung ist in der Zeichnung dargestellt und wird nachfolgend erläutert. Es zeigen:

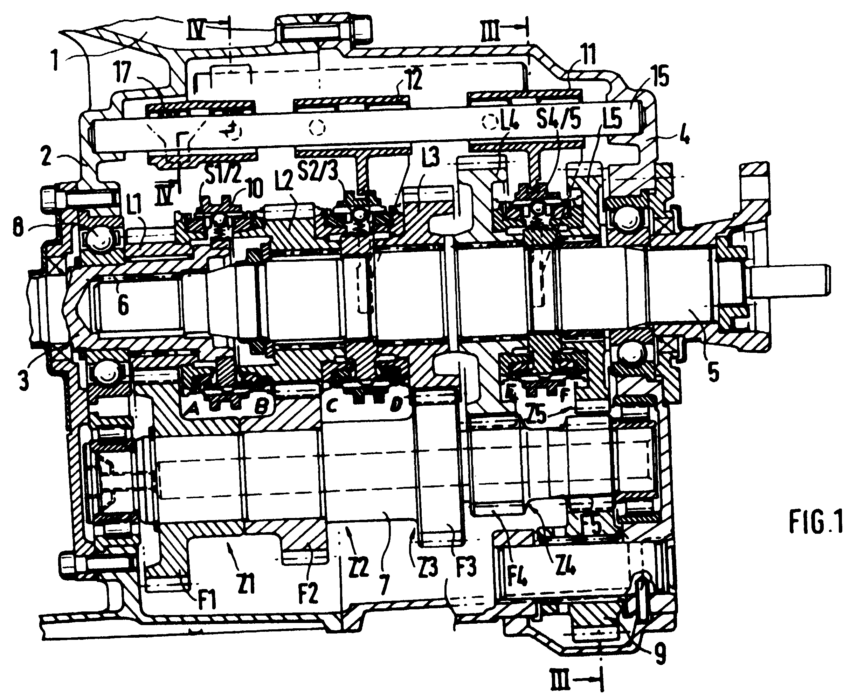

- Fig. 1: Längsschnitt eines Gangschaltgetriebes,

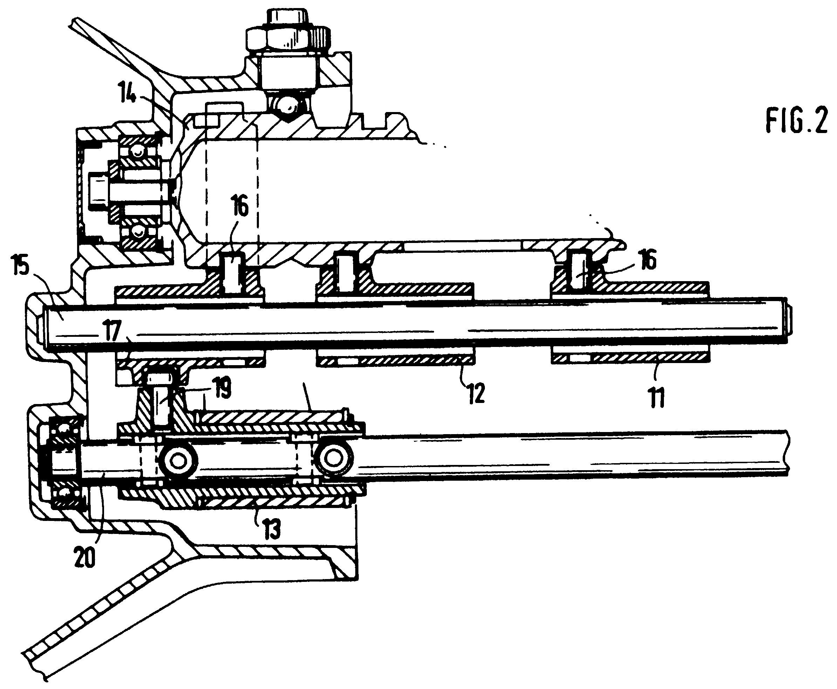

- Fig. 2: Längsschnitt nach Linie II-II der Fig. 1,

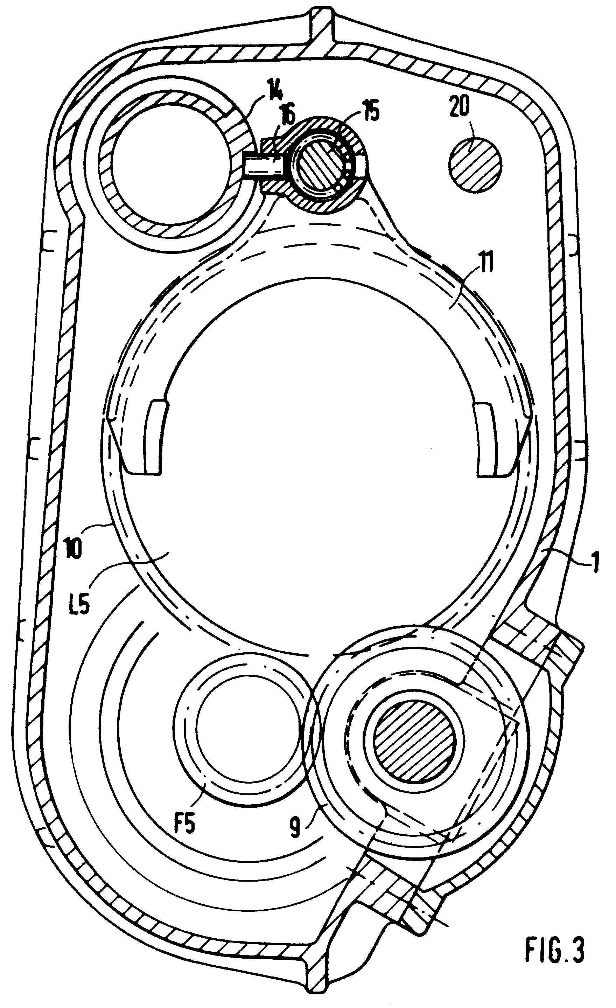

- Fig. 3: Querschnitt nach Linie III-III der Fig. 1,

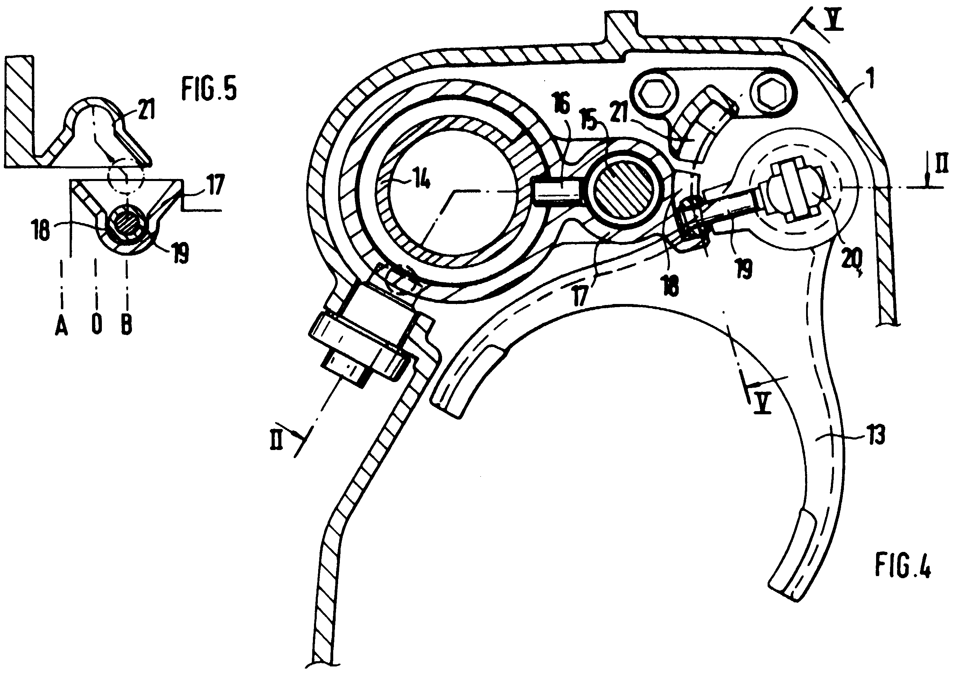

- Fig. 4: Querschnitt nach Linie IV-IV der Fig. 1,
- Fig. 5: Abwicklung in Ebene V-V von Fig. 4.

Ein Gangschaltgetriebe eines Kraftfahrzeugs mit sechs Vorwärtsgängen und einem Rückwärtsgang ist von einem Getriebegehäuse 1 umschlossen. In der einen Stirnwand 2 des Getriebegehäuses ist eine Eingangswelle 3, in der anderen Stirnwand 4 eine Ausgangswelle 5 gelagert. Die Ausgangswelle 5 ist an ihrer anderen Seite nahe der Stirnwand 2 in einem Nadellager 6 zentrisch in der hohlgebohrten Eingangswelle 3 gelagert. Parallel zur Eingangswelle 3 und Ausgangswelle 5 ist im Getriebegehäuse 1 eine Nebenwelle 7 gelagert, auf der alle Festräder F der jeweils aus einem Losrad L und einem Festrad F bestehenden Zahnradpaare Z1, Z2, Z3, Z4 und Z5 sitzen.

Das Losrad L1 von Z1 ist auf der Eingangswelle 3 gelagert und am Kugellager 8 der Eingangswelle 3 axial abgestützt. Die übrigen Losräder L2, L3, L4, L5 sind auf der Ausgangswelle 5 gelagert und kämmen mit den Festrädern F2, F3, F4, F5, wobei das Losrad L5 für den Rückwärtsgang R über ein Zwischenrad 9 mit dem Festrad F5 in Eingriff steht, um eine Bewegungsumkehr zu erhalten. Die Losräder L2, L3, L4, L5 sind mittels handelsüblicher, gleichgestalteter Synchronisierkupplungen mit der Ausgangswelle 5 kuppelbar, das Losrad L1 ist mit der Eingangswelle 3 kuppelbar.

Mit einer Synchronisierkupplung S 1/2 ist in ihrer linken Schließlage A das Zahnradpaar Z1, in ihrer rechten Schließlage B das Zahnradpaar Z2 gekuppelt. Eine Synchronisierkupplung des S 2/3 kuppelt in Schließlage C das Zahnradpaar Z2 in Schließlage D das Zahnradpaar Z3. Eine weitere Synchronisierkupplung S 4/5 kuppelt in Schließlage E das Zahnradpaar Z4, in Schließlage F den Radsatz Z5 des Rückwärtsganges. Um einen der Getriebegänge G1, G2, G3, G4, G5, G6 oder R zu schalten, werden jeweils zwei Synchronisierkupplungen in Schließlage gebracht. Aus nachfolgender Tabelle wird deutlich, welche Schließlagen zum Schalten der Getriebegänge realisiert sind. Auch die Gangübersetzungen i und Stufensprünge ϕ sind daraus ersichtlich. Die Gesamtspreizung ψ des Gangschaltgetriebes beträgt 5,2.

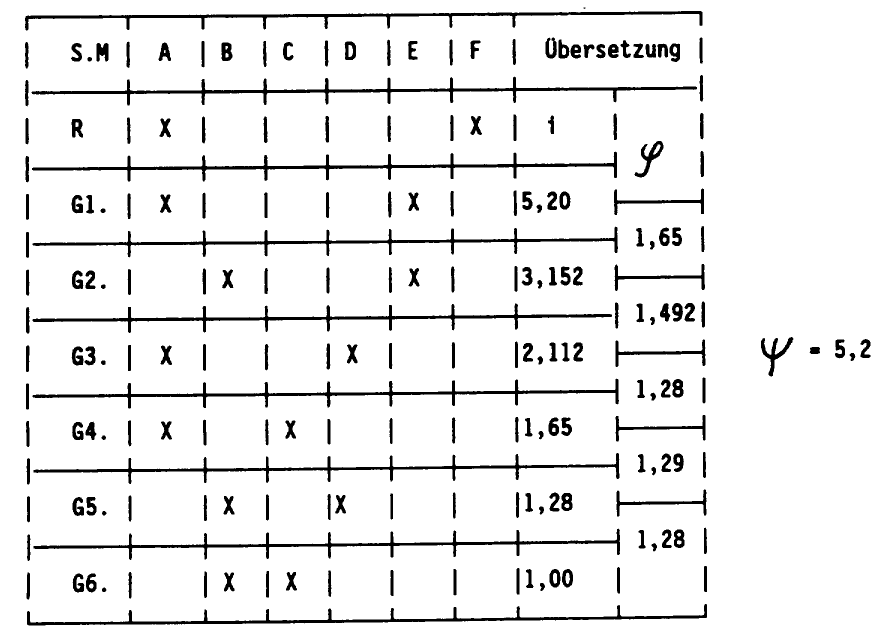

Zum Schalten der fünf unteren Getriebegänge G1 bis G5 und des Rückwärtsganges R sind jeweils zwei Zahnradpaare erforderlich. Zum Schalten des 6. Ganges G6 wird das Losrad L2 mittels der Synchronisierkupplung S 1/2 in ihrer Schließlage B mit der Eingangswelle 3, mittels der Synchronisierkupplung S 2/3 in ihrer Schießlage C mit der Ausgangswelle 5 verbunden, so daß ein direkter Durchtrieb ohne Übersetzungsänderung von der Eingangswelle 3 zur Ausgangswelle 5 erfolgt. Die übrigen Übersetzungen i1 bis i5 sind so gewählt, daß die Gänge G1 und G2 eine erwünschte größere Spreizung haben, als sie bei geometrischer Stufung mit gleichbleibendem Stufensprung ϕ möglich ist. Die progressive Gangstufung wird dadurch ermöglicht, daß eine erste Gruppenschaltung zwischen den Gängen G1 und G2 und eine zweite Gruppenschaltung zwischen den nicht benachbarten Gängen G3 und G5 realisiert ist.

Um die Synchronisierkupplungen in Schließlage bringen zu können, greifen in ihre Schiebemuffen 10 die Schaltgabeln 11, 12, 13 ein, die von einer Schaltwalze 14 betätigt werden. Die Schaltwalze 14 ist in herkömmlicher Weise ausgeführt und bewirkt mit Kurvenbahnen eine Axialverschiebung der Schaltgabeln. Die Schaltgabeln 11, 12 sind auf einer gehäusefesten Achse 15 längsverschieblich gelagert und von der Schaltwalze 14 direkt über Stifte 16 verschiebbar. Auf der Achse 15 ist auch ein Mitnehmer 17 gelagert und von der Schaltwalze 14 über einen Stift 16 betätigbar. In eine kreisförmige Nut 18 des Mitnehmers 17 greift ein Kuppelfinger 19 ein. Der Kuppelfinger 19 ist an einer Welle 20 befestigt, auf der die Schaltstange 13 gelagert ist.

Soll die Synchronisierkupplung S 1/2 in ihre mittlere Neutralstellung gebracht werden, um das Getriebe in Leerlauf zu schalten, so wird der Kuppelfinger 19 aus der Nut 18 ausgeschwenkt und in eine gehäusefeste Bogenführung 21 eingeschwenkt.

Das ausgeführte Gangschaltgetriebe benötigt für sechs Vorwärtsgänge vier Radpaare. Das Getriebe läßt sich beliebig erweitern, wobei jeweils durch Hinzufügen eines weiteren Radpaares zwei zusätzliche Getriebegänge darstellbar sind.

## Patentansprüche

1. Verfahren zum Schalten eines Gangschaltgetriebes eines Kraftfahrzeuges mit einem Hauptgetriebe und mit einem Gruppengetriebe, mit mehreren Zahnradpaaren, mit mehreren durch Synchronisierkupplungen schaltbaren und eine Gangstufung aufweisenden Vorwärtsgängen (G1 - G6) und einem Rückwärtsgang (R),
- bei dem alle Getriebegänge nur durch gleichzeitiges Schließen zweier ihnen zugeordneter Kupplungen geschaltet werden,
- bei dem jeweils zwei Zahnradpaare zum Schalten der übersetzten Getriebegänge (G1 - G5) dienen,
- bei dem Zahnradpaare des Hauptgetriebes zum Schalten zweier Getriebegänge in jeweils einer Gruppenschaltung doppelt genutzt werden und dabei
-- ein erstes Zahnradpaar (L4, F4) des Hauptgetriebes mit jeweils einem weiteren Zahnradpaar in einer ersten Gruppenschaltung zum Schalten zweier benachbarter Getriebegänge gekoppelt wird,
**dadurch gekennzeichnet**
daß ein zweites Zahnradpaar (L3, F3) des Hauptgetriebes mit jeweils einem weiteren Zahnradpaar in einer zweiten Gruppenschaltung zum Schalten zweier nicht benachbarter Getriebegänge gekoppelt wird, wodurch eine progressive Gangstufung realisiert ist.

2. Verfahren zum Schalten eines Gangschaltgetriebe nach Anspruch 1, dadurch gekennzeichnet, daß die Zahnradpaare zwischen einer Eingangswelle (3), einer zu ihr koaxial gelagerten Ausgangswelle (5) und einer alle Festräder enthaltenden, parallel liegenden Nebenwelle (7) angeordnet werden.

3. Verfahren zum Schalten eines Gangschaltgetriebe nach Anspruch 1 und 2, dadurch gekennzeichnet, daß ein Losrad (L1) und die ihm zugeordnete erste Synchronisierkupplung (S1/2) auf der Eingangswelle (3), alle übrigen Losräder und ihre Synchronisierkupplungen auf der Ausgangswelle (5) angeordnet werden.

4. Verfahren zum Schalten eines Gangschaltgetriebe nach Anspruch 2 oder 3, dadurch gekennzeichnet, daß neben den übersetzten Getriebegängen auch der Rückwärtsgang aus zwei Zahnradpaaren gebildet wird, wobei jeweils das Losrad (L1, L2) des einen Zahnradpaares mit der Eingangswelle (3), das Losrad (L2 - L5) des anderen Zahnradpaares mit der Ausgangswelle (5) mittels einer zugehörigen Synchronisierkupplung verbunden wird.

5. Verfahren zum Schalten eines Gangschaltgetriebe nach Anspruch 2 oder 3, dadurch gekennzeichnet, daß das Losrad (L2) eines Zahnradpaares mittels der ersten Synchronisierkupplung (S1/2) mit der Eingangswelle (3), mittels der zweiten, an seiner anderen Stirnseite wirkenden Synchronisierkupplung (S2/3) mit der Ausgangswelle (5) verbunden wird, wodurch der höchste Getriebegang (G6) schaltbar wird.

6. Verfahren zum Schalten eines Gangschaltgetriebe nach einem der vorangegangenen Ansprüche, dadurch gekennzeichnet, daß die Ausgangswelle (5) zentral in der Eingangswelle (3) gelagert wird, und daß die Eingangswelle (3) an der einen Gehäusestirnwand (2), die Ausgangswelle (5) an der anderen Gehäusestirnwand (4) gelagert wird.

7. Verfahren zum Schalten eines Gangschaltgetriebe nach einem der vorangegangenen Ansprüche, dadurch gekennzeichnet, daß für ein 6-Gang-Getriebe mit Rückwärtsgang vier Zahnradpaare und drei Synchronisierkupplungen verwendet werden.

8. Verfahren zum Schalten eines Gangschaltgetriebe nach Anspruch 3, dadurch gekennzeichnet, daß die erste Synchronisierkupplung (S1/2) beim Schalten aller Getriebegänge beteiligt wird und bei geschaltetem Gang entweder in der einen oder anderen Schließlage (A oder B) ist und in ihrer neutralen Mittellage das Getriebe in Leerlauf bringt.

9. Verfahren zum Schalten eines Gangschaltgetriebe nach einem der vorangegangenen Ansprüche, dadurch gekennzeichnet, daß in die Synchronisierkupplungen (S1/2, S2/3, S4/5) Schaltgabeln (13, 12, 11) eingreifen, die von einer Schaltwalze (14) betätigt werden.

10. Verfahren zum Schalten eines Gangschaltgetriebe nach Anspruch 9, dadurch gekennzeichnet, daß die eine Schaltgabel (13) in die Synchronisierkupplung (S1/2) eingreift und über einen Mitnehmer und einen bei Bedarf aus ihm ausrastbaren Kuppelfinger von der Schaltwalze (14) betätigt wird.

11. Verfahren zum Schalten eines Gangschaltgetriebe nach einem der vorangegangenen Ansprüche mit sechs Vorwärtsgängen der Gangübersetzungen i1, i2, i3, i4, i5, i6, dadurch gekennzeichnet, daß für die progressive Gangstufung folgende Beziehung gilt: il/i2 = i3/i5 = i4/i6 = i3/i4 · i4/i5.

12. Verfahren zum Schalten eines Gangschaltgetriebe nach einem der vorangegangenen Ansprüche, dadurch gekennzeichnet, daß die Größe der Stufensprünge zu den unteren Getriebegängen (G2, G1) hin kontinuierlich ansteigt.

## Claims

1. A method of shifting a gear-shift transmission of a motor vehicle with a main transmission and a range-change transmission, with a plurality of pairs of gearwheels, with a plurality of forward gears (**G1** to **G6**) shiftable by synchronizing couplings and comprising a gear stepping and with a reverse gear (**R**),
- in which all the gears are shifted only by simultaneous closure of two couplings associated therewith,
- in which two respective pairs of gearwheels are used for shifting the stepped-down gears (**G1** to **G5**),
- in which pairs of gearwheels of the main transmission are used doubled for shifting two gears in one respective range-change gear shifting,
-- a first pair of gearwheels (**L4, F4**) of the main transmission are connected to a respective further pair of gearwheels in a first range-change gear shifting for shifting two adjacent gears,
**characterized in that a** second pair of gearwheels (**L3, F3**) of the main transmission is connected to a respective further pair of gearwheels in a second range-change gear shifting for shifting two non-adjacent gears, which results in a progressive gear stepping.

2. A method of shifting a gear-shift transmission according to Claim 1, **characterized in that** the pairs of gearwheels are arranged between an input shaft (3), an output shaft (5) mounted coaxially therewith and a layshaft (7) situated parallel and containing all the fixed gearwheels.

3. A method of shifting a gear-shift transmission according to Claims 1 and 2, **characterized in that** a loose gearwheel (**L1**) and the first synchronizing coupling (**S1/2**) associated therewith are mounted on the input shaft (3), and all the remaining loose gearwheels and the synchronizing couplings thereof are mounted on the output shaft (5).

4. A method of shifting a gear-shift transmission according to Claim 2 or 3, **characterized in that** as well as the stepped-down gears the reverse gear is also formed by two pairs of gearwheels, wherein the loose gearwheel (**L1, L2**) of one pair of gearwheels is connected respectively to the input shaft (3), and the loose gearwheel (**L2** to **L5**) of the other pair of gearwheels is connected to the output shaft (5) by means of an associated synchronizing coupling.

5. A method of shifting a gear-shift transmission according to Claim 2 or 3, **characterized in that** the loose gearwheel (**L2**) of one pair of gearwheels is connected to the input shaft (3) by means of the first synchronizing coupling (**S1/2**), and to the output shaft (5) by means of the second synchronizing coupling (**S2/3**) acting on the other end face of the said loose gearwheel (**L2**), as a result of which the highest gear (**G6**) can be shifted.

6. A method of shifting a gear-shift transmission according to one of the preceding Claims, **characterized in that** the output shaft (5) is mounted centrally in the input shaft (3), and the input shaft (3) is mounted on one end wall (2) of the housing and the output shaft (5) on the other end wall (4) of the housing.

7. A method of shifting a gear-shift transmission according to one of the preceding Claims, **characterized in that** four pairs of gearwheels and three synchronizing couplings are used for a 6-gear transmission with a reverse gear.

8. A method of shifting a gear-shift transmission according to Claim 3, **characterized in that** the first synchronizing coupling (**S1/2**) cooperates in the shifting of all the gears and when a gear is shifted it is in either one or the other closed position (**A** or **B**) and in its neutral middle position it puts the transmission into idling.

9. A method of shifting a gear-shift transmission according to one of the preceding Claims, **characterized in that** gear-shift forks (13, 12, 11) actuated by a gear-shift roller (14) engage in the synchronizing couplings (**S1/2, S2/3, S4/5**).

10. A method of shifting a gear-shift transmission according to Claim 9, **characterized in that** one gear-shift fork (13) engages in the synchronizing coupling (**S1/2**) and is actuated by the gear-shift roller (14) by way of an entrainment means and a coupling finger releasable therefrom when required.

11. A method of shifting a gear-shift transmission according to one of the preceding Claims, having six forward gears with the gear reductions **i1, i2, i3, i4, i5, i6, characterized in that** for the progressive gear stepping the following relationship applies: **i1/i2 = i3/i5 = i4/i6 = i3/i4 · i4/i5.**

12. A method of shifting a gear-shift transmission according to one of the preceding Claims, **characterized in that** the magnitude of the stepping jumps to the lower gears (**G2, G1**) increases continuously.

## Revendications

1. Procédé de commande de la manoeuvre d'une boîte de vitesses de véhicule automobile, avec une transmission principale et avec une transmission par des groupes, comportant plusieurs paires de pignons, avec plusieurs rapports avant (G1 à G6), pouvant être enclenchés au moyen d'accouplements progressifs de synchronisation et présentant un étagement du rapport de transmission, et avec une vitesse arrière (R),
- pour lequel tous les rapports ne sont enclenchés que par fermeture simultanée de deux de leurs accouplements associés,
- pour lequel chaque fois deux paires de pignons servent à l'enclenchement des rapports de transmission avant (G1 à G5),
- pour lequel des paires de pignons de l'entraînement principal sont utilisées en double pour l'enclenchement de deux rapports de transmission, l'enclenchement se faisant chaque fois par groupes, et
-- une première paire de pignons (L4, F4) de la transmission principale étant couplée respectivement à une autre paire de pignons, dans un premier engrènement par groupes, pour l'enclenchement de deux rapports voisins,
caractérisé en ce que
une deuxième paire de pignons (L3, F3) de la transmission principale est respectivement couplée à une autre paire de pignons se trouvant dans un autre engrènement par groupes, pour enclencher deux rapports qui ne sont pas voisins, réalisant ainsi un étagement progressif des rapports.

2. Procédé de commande de la manoeuvre d'une boîte de vitesses selon la revendication 1, caractérisé en ce que les paires de pignons sont disposées entre un arbre d'entrée (3), un arbre de sortie (5) monté coaxialement par rapport à celui-ci et un arbre annexe (7), contenant des pignons qui sont tous assujettis et qui est monté en parallèle.

3. Procédé de commande de la manoeuvre d'une boîte de vitesses selon les revendications 1 et 2, caractérisé en ce qu'un pignon f ou (L1) et le premier accouplement progressif de synchronisation (S1/2) lui étant associé sont disposés sur l'arbre d'entrée (3), la totalité du reste des pignons fous et de leurs accouplements progressifs de synchronisation étant disposés sur l'arbre de sortie (5).

4. Procédé de commande de la manoeuvre d'une boîte de vitesses selon la revendication 2 ou 3, caractérisé en ce qu'outre les rapports avant, la marche arrière est également constituée de deux paires de pignons, le pignon fou (L1, L2) d'une paire de pignons étant relié à l'arbre d'entrée (3), le pignon fou (L2, L5) de l'autre paire de pignons étant relié à l'arbre de sortie (5) au moyen d'un accouplement progressif de synchronisation afférent.

5. Procédé de commande de la manoeuvre d'une boîte de vitesses selon la revendication 2 ou 3, caractérisé en ce que le pignon fou (L2) d'une paire de pignons est relié à l'arbre d'entrée (3) au moyen du premier accouplement progressif de synchronisation (S1/2), à l'arbre de sortie (5) au moyen du deuxième accouplement progressif de synchronisation (S2/3) agissant sur son autre face frontale, ceci permettant d'enclencher le plus haut rapport (G6).

6. Procédé de commande de la manoeuvre d'une boîte de vitesses selon l'une des revendications précédentes, caractérisé en ce que l'arbre de sortie (5) est monté à rotation centralement dans l'arbre d'entrée (3), et en ce que l'arbre d'entrée (3) est monté à rotation sur une paroi frontale (2) du carter, l'arbre de sortie (5) étant monté à rotation sur l'autre paroi frontale (4) du carter.

7. Procédé de commande de la manoeuvre d'une boîte de vitesses selon l'une des revendications précédentes, caractérisé en ce qu'on utilise, pour une boîte à 6 rapports équipée d'une marche arrière, quatre paires de pignons et trois accouplements progressifs de synchronisation.

8. Procédé de commande de la manoeuvre d'une boîte de vitesses selon la revendication 3, caractérisé en ce que le premier accouplement progressif de synchronisation (S1/2) est impliqué lors de l'enclenchement de tous les rapports et, lorsque le rapport est enclenché, est placé soit dans l'une soit dans l'autre position de fermeture (A ou B) et est placé en roue libre lorsque la boîte de vitesse se trouve dans sa position médiane neutre.

9. Procédé de commande de la manoeuvre d'une boîte de vitesses selon l'une des revendications précédentes, caractérisé en ce que des fourchettes d'enclenchement (13, 12, 11), actionnées par un rouleau d'enclenchement (14), s'engagent dans les accouplements progressifs de synchronisation (S1/2, S2/3, S4/5).

10. Procédé de commande de la manoeuvre d'une boîte de vitesses selon la revendication 9, caractérisé en ce qu'une fourchette d'enclenchement (13) s'engage dans l'accouplement progressif de synchronisation (S1/2) et est actionnée par le rouleau d'enclenchement (14)), par l'intermédiaire d'un organe d'entraînement et, en cas de besoin, d'un doigt de couplage susceptible d'être désolidarisé de lui.

11. Procédé de commande de la manoeuvre d'une boîte de vitesses selon l'une des revendications précédentes, équipé de six rapports avant donnant des rapports de démultiplication i1, i2, i3, i4, i5, i6, caractérisé en ce que la relation suivante régit l'étagement progressif des vitesses : i1/i2 = i3/i5 = i4/i6 = i3/i4 x i4/i5.

12. Procédé de commande de la manoeuvre d'une boîte de vitesses selon l'une des revendications précédentes, caractérisé en ce que la valeur des sauts d'étagement augmente de façon continue lorsque l'on va aux rapports inférieurs (G2, G1).
